(19) Europäisches Patentamt
European Patent Office
Office européen des brevets

(11) **EP 3 326 732 B1**

(12) **EUROPEAN PATENT SPECIFICATION**

(45) Date of publication and mention
of the grant of the patent:
**24.04.2019 Bulletin 2019/17**

(21) Application number: **15898884.0**

(22) Date of filing: **17.07.2015**

(51) Int Cl.:
**B22C 7/02** *(2006.01)*  **B29C 45/67** *(2006.01)*
**B29C 67/24** *(2006.01)*

(86) International application number:
**PCT/JP2015/070617**

(87) International publication number:
**WO 2017/013724 (26.01.2017 Gazette 2017/04)**

(54) **CLAMPING DEVICE FOR INJECTION MOLDING OF WAX PATTERN AND RELATED METHOD**

KLEMMVORRICHTUNG ZUM SPRITZGIESSEN VON WACHSMUSTERN UND ZUGEHÖRIGES VERFAHREN

DISPOSITIF DE SERRAGE POUR LE MOULAGE DE MOTIF DE CIRE PAR INJECTION ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.05.2018 Bulletin 2018/22**

(73) Proprietor: **Eishin Technology Co., Ltd**
**Ayase-shi, Kanagawa 252-1107 (JP)**

(72) Inventor: **KUBO, Chikanari**
**Yamato-shi**
**Kanagawa 242-0002 (JP)**

(74) Representative: **Treeby, Philip David William**
**Maucher Jenkins**
**26 Caxton Street**
**London SW1H 0RJ (GB)**

(56) References cited:
**EP-A1- 2 756 895**  **WO-A1-2013/038448**
**WO-A1-2014/076738**  **JP-A- H04 127 937**
**JP-A- 2007 237 186**  **US-A- 4 948 359**

• ChiYuYan: "Smart Auto Wax Injector V9 0 Series", YouTube, 10 November 2013 (2013-11-10), pages 1-6, XP054978444, Retrieved from the Internet: URL:http://www.youtube.com/watch?v=NGYpA E5 KDps#t=52 [retrieved on 2018-06-22]

**Description**

TECHNICAL FIELD

The present application relates to a wax injection molding machine used in lost-wax precision casting, specifically to a clamp device used for fixing a rubber mold in a wax injection molding.

BACKGROUND ART

Ornaments, accessories, jewelry and the likes mainly using a noble metal are small and have complicated and precise shapes. There has been a demand to produce such products in large quantities, and a lost wax precision injection method has been developed in this industry. Of course, this method is also applicable in manufacturing precision industrial components other than the above.

Lost wax precision casting in the jewelry manufacturing industry has the following steps.

A first step is a process of producing a model.
A second step is a process of producing a rubber mold having a cavity of the same shape as the model.
A third step is a process of producing a wax mold of the same shape as the model, by injecting a molten wax into the rubber mold, and taking it out. In general, by repeatedly performing the third step, a large number of wax molds are produced.
A fourth step is a process of attaching a large number of wax molds produced in the third step in a tree-like manner around a wax stick while melting a runner end portion of the wax molds, placing it in a cylindrical heat-resistant vessel, pouring plaster into the vessel, and producing a plaster mold.
A fifth step is a baking process using an electric furnace or a gas furnace or others, which conprises melting the wax in the plaster mold at a low temperature to flow it out, burning completely the wax adhered to the inside of the cavity at a moderate temperature, strengthening the plaster mold to withstand an impact at the time of pouring a noble metal in it by further increasing the temperature, and then, waiting with lowering the temperature thereof to a level suitable for pouring the noble metal.
A sixth step is a casting process of pouring a noble metal into the plaster mold having a number of cavities of the same shape as the model.
A seventh step is a finishing process consisting of breaking the plaster to pieces by rapidly cooling the plaster mold with water after the noble metal has been solidified, taking out the noble metals in the tree-like form, cutting away unnecessary portions, and polishing the noble metal of the same shape as the model.

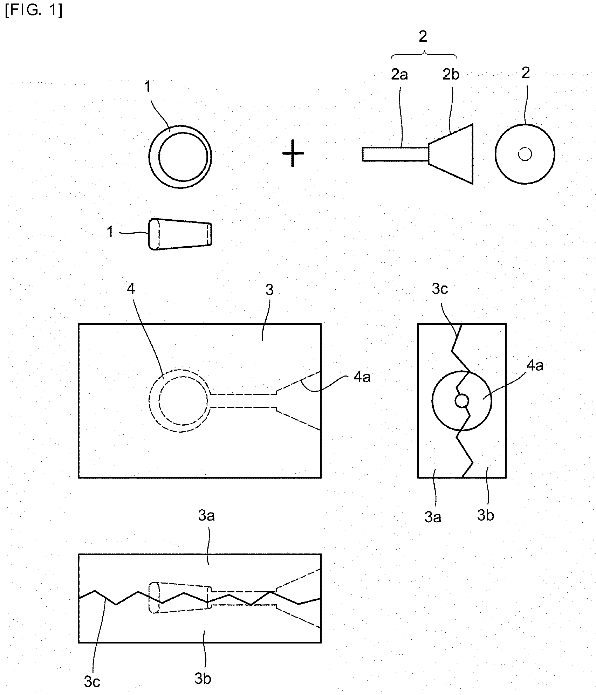

A method of manufacturing the rubber mold in the second step will be described with reference to FIG. 1. In the second step, a molding frame (not shown) of a size corresponding to a size of a rubber mold 3 to be manufactured, a model 1 and a component 2 (a sprue runner 2a and a pouring gate 2b) are used. Steps of closing the bottom of the molding frame by a plate, pouring a pre-vulcanization silicon rubber material in the lower half of the frame, placing the model 1 to which the component 2 is attached on it, pouring a pre-vulcanization material in the upper half of the frame, closing the upper part of the frame by a plate, and vulcanizing by increasing the temperature while pressing are carried out. A silicon rubber of two-liquid solidification type may be used instead of the vulcanizable rubber.

When the silicone rubber has been hardened to have the rubber inherent elasticity, the rubber mold 3 is removed from the frame, a zig-zag cut 3c is made in the rubber mold, the model 1 and the component 2 bonded thereto are taken out, and the rubber mold is separated into an upper rubber mold 3a and a lower rubber mold 3b. Thus, a rubber mold 3 having a cavity 4 of the same shape as the model 1 and the component 2 in it is obtained. By making such a cut 3c on the entire separation surface, the upper and lower rubber molds 3a and 3b can be put together exactly in line with each other, and the inside cavity shape can be accurately reproduced.

Such a cut 3c also has an effect to facilitate vacuuming and sealing of pressurized wax at the time of injecting a wax into the rubber mold 3 to create a wax mold. By taking out the wax mold from the rubber mold 3 with deforming the lower rubber mold 3b after separating the upper rubber mold 3a from the mating surfaces (cut) 3c, even a wax mold having a complicated shape can be taken out easily without breaking it. In some cases, the interior of the rubber mold may be divided into several parts, or a core(s) may be inserted.

Since models have a variety of sizes, the sizes and thicknesses of rubber molds also change accordingly. In addition, the rubber hardness is also often changed in accordance with the durability of the rubber mold and the degree of difficulty of removing wax molds from the interior of the rubber molds.

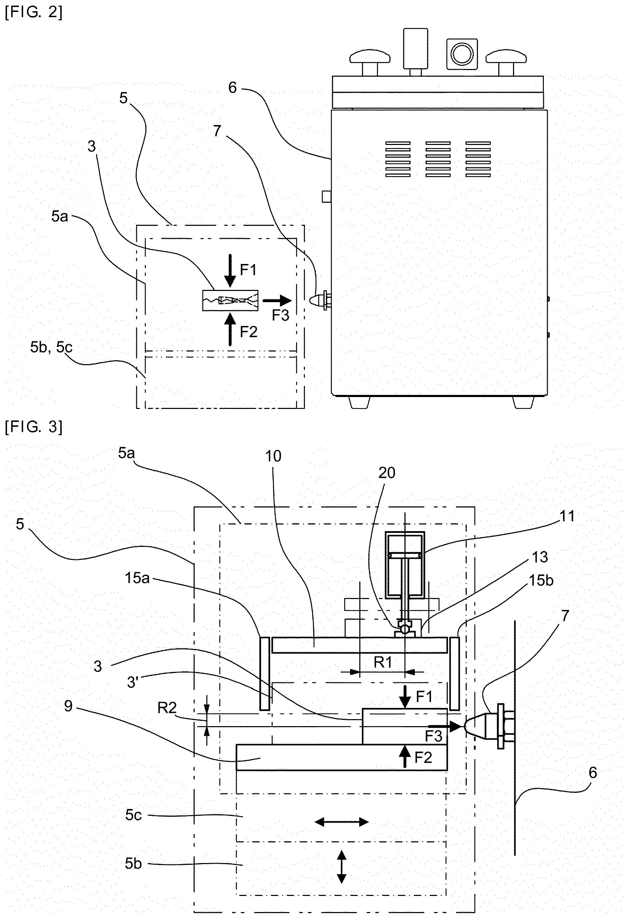

FIG. 2 and FIG. 3 show a conceptual view of a wax mold injection molding machine and a clamp device used in the third step.

A wax mold injection molding machine 6 includes an injection nozzle 7, and basically has a function of vacuuming the cavity 4 in the rubber mold from the injection nozzle 7 and a function of pressurizing and injecting a molten wax through the injection nozzle 7. Furthermore, for manufacturing a large amount of high-quality wax molds at a high yield, the machine may be required to have functions of controlling a molten wax temperature, controlling an injection nozzle temperature, controlling an injection pressure, controlling a vacuuming time, controlling an injection time and the likes.

The clamp device 5 exerts a clamp force (a clamp force F1, a clamp reaction force F2) by holding the rubber mold 3 between a mounting table 9 and a clamp plate 10 driven by a clamp drive unit 11, aligns the injection nozzle 7 and a pouring gate 4a in vertical and horizontal directions, and seals the rubber mold 3 by pressing it to the injection nozzle 7 by a pressing force F3. In this state, a wax is injected into the cavity 4 of the rubber mold 3 from the injection nozzle 7.

Models 1 have various volumes and shapes, and thus the vertical and horizontal lengths as seen from the top of the rubber molds 3, 3' and the thickness as seen from the side of the rubber molds 3, 3' also vary. Therefore, to cope with this, there is required a further function(s) in addition to the basic functions in FIG. 2 in order to properly inject a molten wax into the cavity 4 in the rubber mold to produce a predetermined wax mold.

The rubber mold 3 is not necessarily constant in thickness, and the clamp plate 10 and the mounting table 9 are not perfectly parallel to each other. Thus, the clamp drive unit 11 and the clamp plate 10 are generally coupled with a floating mechanism 12 that pivotably supports the clamp plate 10 by a spherical bearing portion.

For clamping and properly sealing the rubber mold 3, it is necessary to apply a uniform surface pressure to a rubber mold mating surface 3c. Therefore, it is desirable to clamp the rubber mold by applying a uniform force over the entire surface of the rubber mold. Since the rubber molds 3, 3' have different sizes, it is necessary to move an acting point of the clamp force F1 (the clamp drive unit 11) within a certain range R1.

If the clamp plate 10 moves together with the clamp drive unit 11, there occurs an inconvenience that the clamp plate 10 interfer with the injection nozzle 7 or the whole surface of the rubber mold 3, 3' can not be clamped. To prevent this inconvenience, it is necessary to provide clamp plate guides 15a, 15b in the whole region (stroke) of the clamp plate 10 going up and down.

A vertical movement mechanism 5b adjusts the height of the mounting table 9 within a certain range R2 to enable adjustment of the pouring gates 4a of the rubber molds 3, 3' having different thicknesses to the height of the injection nozzle 7.

A longitudinal movement mechanism 5c moves the mounting table 9 in the longitudinal direction. By generating a pressing force F3 by moving the pouring gate 4a of the rubber molds 3, 3' to the injection nozzle 7 with the longitudinal movement mechanism 5c, it is possible to perform vacuuming the cavity 4 in the rubber mold 3 and sealing the pressure at the time of wax injection into the cavity 4 in the third step.

It is necessary to adjust the clamp force F1 and the pressing force F3 so that a wax injection pressure from the injection nozzle 7 can be changed in accordance with the shape of the cavity 4, properties of the wax and the like and/or so that the rubber molds do not give away to the clamp force. Here, if the clamp force F1 or the pressing force F3 is excessive, the rubber mold 3 will be deformed so that a wax mold close to the model can not be obtained.

**Prior Art List**

**Patent Document**

Patent Document 1: International Publication WO 2013/038448 [0018A] The video, on YouTube, https://www.youtube.com/watch? v=NGYpAE5KDps#t=52, entitled "Smart Auto Wax Injector V9 0 Series" by ChiYuYan, found in the European Search Report, XP054978444, discloses a clamp device for wax mold injection molding, comprising: a clamp mechanism section including a mounting table for mounting a mold, a clamp plate, and a clamp drive unit for changing a vertical distance between the mounting table and the clamp plate, and a vertical movement mechanism for vertically moving the clamp mechanism section, wherein: the clamp plate is clamped between the mounting table and the clamp plate when the clamp drive unit changes a distance between the mounting table and the clamp plate from a first distance to a second distance smaller than the first distance.

PROBLEMS TO BE SOLVED BY THE INVENTION

As described above, it is necessary to adjust the height of the mounting table 9 for aligning the sprue 4a of the rubber molds 3, 3' of different thicknesses with the injection nozzle 7.

The height adjustment of the mounting table 9 in the related art has been mainly performed by the following methods 1 and 2.

In the method 1, the mounting table 9 is moved up and down by the vertical movement mechanism 5b while visually checking the sprue 4a and the injection nozzle 7 from the side (from the direction shown in FIG. 3). In this method, operation must be done by looking into the rubber mold 3 and the injection nozzle 7. As the gap between them is very narrow and the sprue 4a is hard to see from the side, this operation is a quite difficult work.

In the method 2, the thickness of the rubber mold 3 is measured in advance and stored in an IC tag or the like, the moving distance of the mounting table 9 necessary for aligning the sprue 4a to the height of the injection nozzle 7 is calculated from the thickness of the rubber mold 3 placed on the mounting table 9, and the mounting table 9 is moved by the vertical movement mechanism 5b while measuring the position of the mounting table 9 by a resistance type potentiometer 1 or a rotary encoder or the like. In the method 2, there is a problem that it takes time and effort to correctly measure the thickness of individual rubber molds 3 and to input and store the results. As tens of thousands of rubber molds 3 are stored, assigning numbers and/or putting IC tags to all of these rubber molds 3 is very troublesome. Such a work cannot be done by ordinary workers but have to be done by administrators, and so, has a large influence on a cost increase.

The clamp device 5 used in the methods 1 and 2 mostly have a structure in which the vertical movement mechanism 5b moves up and down the entire clamp mechanism section 5a including the mounting table 9 and the clamp drive unit 11. In other words, the clamp plate 10 is moved up and down by the operation of the clamp drive unit 11 and by the operation of the vertical movement mechanism 5b.

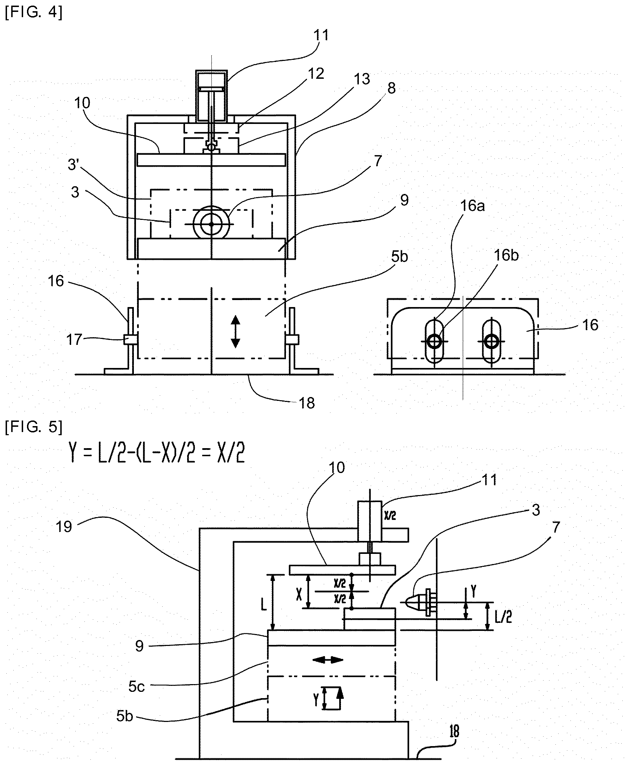

Further, the vertical movement mechanism 5b generally moves up and down the mounting table 9 by a manual screw, an electric screw, or a pneumatic drive. However, as shown in FIG. 4, the method 1 sometimes uses a device with a structure, in which a vertically extending elongate hole 16a is formed in the bracket 16 disposed on the reference surface 18, the rod 16b projecting from the clamp mechanism section 5a is inserted into the elongate hole 16a, and the height is adjusted by the position of the rod 16b in the elongate hole 16a, and then the height is fixed by a bolt or the like.

In recent years, a wax mold injection molding machine (hereinafter referred to as "Riacetech product") addressing the above-mentioned problems has been developed by Italian company, Riacectech Srl. Fig. 5 shows a schematic diagram of Riacetech product. In the Riacetech product, the clamp drive unit 11 is fixed to the reference plane 18, and the injection nozzle 7 is disposed at a position of 1/2 of the distance L between the mounting table 9 and the clamp plate 10. Usually, the sprue 4a of the rubber mold 3 is positioned at the center of the thickness of the rubber mold 3. In this condition, as shown in FIG. 5, regardless of the thickness of the rubber mold 3, the distance Y between the sprue 4a and the injection nozzle 7 is 1/2 of the distance X from the rubber mold 3 to the clamp plate 10. In the Riacetech product, descent of the clamp plate 10 and ascent of the mounting table 9 are performed synchronously and at the same speed. Thereby, when the mounting table 9 ascends by X/2 and the clamp plate 10 descends by X/2, the rubber mold 3 is clamped and the sprue 4a is aligned with the height of the ejection nozzle 7.

Although the Riasetech product has solved long-term challenges in the industry (problems of the methods 1 and 2), it comes with a difficulty of controlling movement of the rubber mold 3 synchronously with the clamp plate 10 at the same speed.

In other words, since the distance X is unknown from a machine-side viewpoint, control of moving each of the mounting table 9 and the clamp plate 10 by X/2 is impossible. Therefore, it is indispensable to move the mounting table 9 and the clamp plate 10 synchronously at the same speed. On the other hand, in order to obtain the variability and accuracy of the clamping force with respect to the rubber mold 3, it is desirable to drive the clamp plate 10 pneumatically. However, the mechanism 19 for moving the mounting table 9 synchronously at the same speed with the pneumatically driven clamp plate 10 is technologically difficult and requires complexity, a high cost, and/or a large size. Although the internal structure of the mechanism 19 in the Riacetech product is unknown to the applicant, from the appearance of the Riacetech product, the mechanism 19 looks to be so large in structure such that the workability would be hindered. From this, difficulty in simultaneous attainment of the synchronicity and the speed uniformity is assumed.

SOLUTION TO PROBLEM

In this application, a clamp device for wax mold injection molding in accordance with independent claim 1 as well as in accordance with independent claim 5 is provided. The current invention further provides a method of controlling a clamp device for wax mold injection molding in accordance with independent claim 7.

It is preferable that the clamp device further comprises a longitudinal movement mechanism that moves the clamp mechanism section in a longitudinal direction; and a movement prohibition mechanism that prohibits the vertical movement mechanism from vertically moving the clamp mechanism section in the longitudinal direction depending on the position of the clamp mechanism section.

It is preferable that the above mentioned n is substantially 2.

In the present application, up and down, front and rear, right and left directions mean mutually perpendicular directions. However, this definition is not strict and should be flexibly interpreted so long as the effect of the invention is achieved. Further, the up and down direction does not necessarily mean a vertical direction. For example, in case of using the clamp device in the following embodiment with toppling it sideways, a vertical direction can be a direction within a horizontal plane.

BRIEF DESCRIPTION OF THE DRAWINGS

FIG. 1 is an explanatory diagram of a rubber mold manufacturing method.
FIG. 2 shows a side view of a wax mold injection molding machine and a clamp device.
FIG. 3 shows a side view of a wax mold injection molding machine and a clamp device.
FIG. 4 is a front view of a main part of a clamp device used in a conventional method.
FIG. 5 is a front view of a main part of a clamp device used in a conventional method.
FIG. 6 shows the principle of a clamp device 5 according to an embodiment of the present invention.
FIG. 7 shows a clamp device 5 according to a preferred embodiment of the present invention.
FIG. 8 shows a clamp device 5 according to another embodiment of the present invention.
FIG. 9 shows a link member 34.

MEANS FOR SOLVING THE PROBLEM

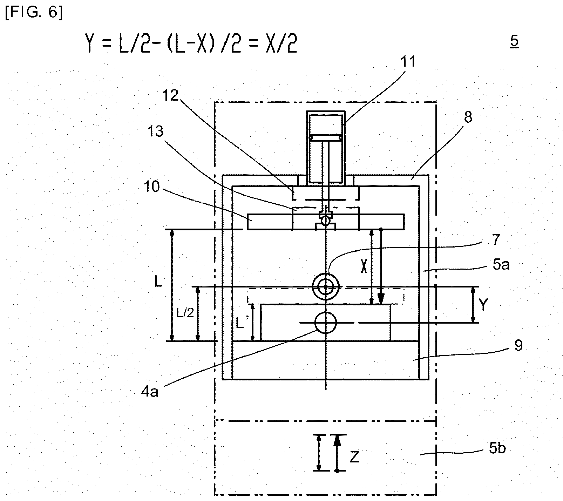

FIG. 6 shows the principle of a clamp device 5 according to an embodiment of the present invention.
As shown in the figure, a clamp device 5 has a clamp mechanism section 5a and a vertical movement mechanism 5b for moving the clamp mechanism section 5a in a vertical direction. The clamp mechanism section 5a includes a mounting table 9 for mounting a rubber mold 3, and a clamp drive unit 11 for moving a clamp plate 10 in a vertical direction. As the clamp drive unit 11 moves the clamp plate 10, the distance between the mounting table 9 and the clamp plate 10 changes. The mounting table 9 and the clamp drive unit 11 are fixed by a clamp mechanism housing 8, and moved vertically in unison by the driving of the vertical movement mechanism 5b.
In an initial state, the clamp plate 10 is located at a certain distance L (referred to as "first distance") higher than the mounting table 9. In order to enable clamping of the rubber mold 3 of various thicknesses, it is desirable that the first distance L has a sufficiently large value (for example, a value larger than the thickness of a thickest rubber mold 3). As the clamp drive unit 11 moves the clamp plate 10 downward, the rubber mold 3 will be clamped between the mounting table 9 and the clamp plate 10. A distance L' between the mounting table 9 and the clamp plate 10 at this state is referred to as "second distance".
In order to clamp the rubber mold 3 of various thicknesses, it is best to arrange the injection nozzle 7 of the wax mold injection molding machine 6 at the center of the mounting table 9 and the clamp plate 10 (a position where the distance between the injection nozzle 7 and the mounting table 9 is L/2). The sprue 4a of the rubber mold 3 is usually located at the center of the thickness of the rubber mold 3. So, a description will first be given on a case where the distance between the injection nozzle 7 and the mounting table 9 is L/2 and the sprue 4a is at a position of 1/2 of the thickness of the rubber mold 3.
Assuming that the descent distance of the clamp plate 10 to clamp the rubber mold 3 (the difference between the first distance L and the second distance L') is X, it can be understood from the mathematical formula shown in FIG. 6 that the distance from the injection nozzle 7 to the sprue 4a is X/2.
Therefore, in the above arrangement, by adopting a configuration that the vertical movement mechanism 5b raises the clamp mechanism section 5a by X/2, the height of the sprue 4a can be aligned with the injection nozzle 7.
Generally, the injection nozzle 7 has a spherical shape, and the sprue 4a has a mortar-like shape. Therefore, even if there is a slight misalignment between the injection nozzle 7 and the sprue 4a, by pressing them, a force is applied to the rubber mold 3 in a direction in which the centers of both are coincident. Therefore, if the clamp mechanism section 5a is supported by a cushion mechanism capable of moving the clamp mechanism section 5a by the force, when the rubber mold 3 is pressed against the injection nozzle 7, the injection nozzle 7 and the sprue 4a can be automatically aligned. The radius of the sprue 4a is about 3 to 5 mm. If the tip of the injection nozzle 7 is located within this radius, the injection nozzle 7 and the sprue 4a are automatically aligned.
Therefore, in the present invention, even if the distance (called "ascent distance Z") of raising the clamp mechanism section 5a by the vertical movement mechanism 5b is not completely the same as X/2, the effect of the present invention is achieved so long as the automatic alignment of the injection nozzle 7 and the sprue 4a works.
Further, in some cases, the injection nozzle 7 is arranged at a position somewhat deviated from the centers of the mounting table 9 and the clamp plate 10. The position of the sprue 4a may also deviate from the center in the thickness direction of the rubber mold 3 due to an error in the manufacturing process or the like. Therefore, it is desirable to adjust the ascent distance Z according to the position of the injection nozzle 7 (and/or the sprue 4a).
Taking these factors into consideration, the distance Z of moving the clamp mechanism section 5a upward by the vertical movement mechanism 5b in the present invention (the first invention) is X/n (where n is 1.5 or more, preferably 1.7 or more, more preferably 1.8 or more, particularly preferably 1. 9 or more and less than 2.5, preferably less than 2.3, more preferably less than 2.2, particularly preferably less than 2.1). The distance Z of moving the clamp mechanism section 5a upward by the vertical movement mechanism 5b in the present second invention is within a range of the following equation (1) (where R is 6 mm, preferably 5 mm, more preferably 4 mm, particularly preferably 3 mm).

$$\frac{X}{2} - R \leqq Z \leqq \frac{X}{2} + R \qquad (1)$$

An important advantage of the present invention is that it is unnecessary to synchronize the movement of the mounting table 9 with the driving of the clamp plate 10, and it is also unnecessary to relate the moving speeds of the mounting table 9 and the clamp plate 10 (for example, relationship of 1:n). In the present invention, the problem relating to the height adjustment of the injection nozzle 7 and the sprue 4a in the methods 1 and 2 is solved without inconveniences such as complexity, cost increase, and/or increase in size like the Riacetech device.

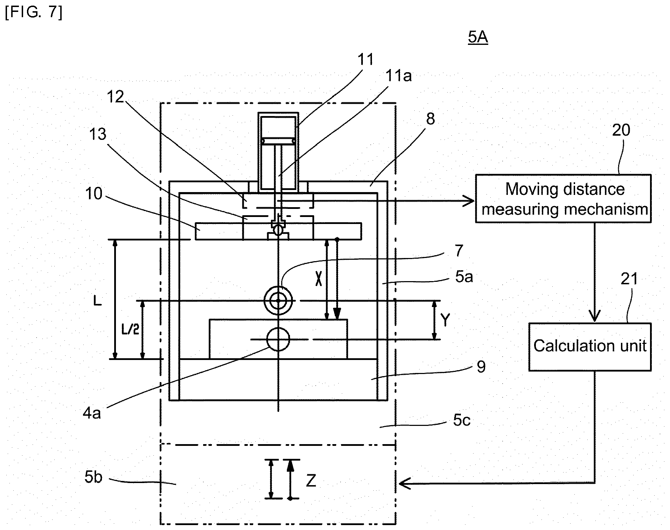

FIG. 7 shows a clamp device 5A according to a preferred embodiment of the present invention.

In addition to the configuration shown in the principle diagram of FIG. 6, the clamp device 5A of the present embodiment includes a moving distance measuring mechanism 20 and a calculation unit 21. A part 5c is a longitudinal movement mechanism for moving the clamp mechanism section 5a in a longitudinal direction.

The moving distance measuring mechanism 20 measures a difference X between the first distance and the second distance (the moving distance of the clamp plate 10 by the clamp drive unit 11 until the rubber mold 3 is clamped). Measurement of the difference X may be carried out by measuring the movement of the clamp plate 10, or by measuring the movement of a member moving in association with the clamp plate 10, such as the drive shaft 11a of the clamp drive unit 11. The measurement method is arbitrary, such as electrical measurement using a linear resistance and a rotary encoder.

The calculation unit 21 has a function of calculating 1/2 of the difference X measured by the moving distance measuring mechanism 20. The vertical movement mechanism 5b moves the clamp mechanism section 5a upward by the distance calculated by the calculation unit 21. The calculation unit 21 can be constituted by a computer or the like. Driving of the clamp mechanism section 5a by the vertical movement mechanism 5b may be performed under the control of the calculation unit 21.

The vertical movement mechanism 5b may move the clamp mechanism section 5a synchronously or asynchronously with the movement of the clamp plate 10. For example, the clamp plate 10 may move the clamp plate downward until the rubber mold 3 is clamped and calculate 1/2 of the difference X, then move the clamp mechanism section 5a upward.

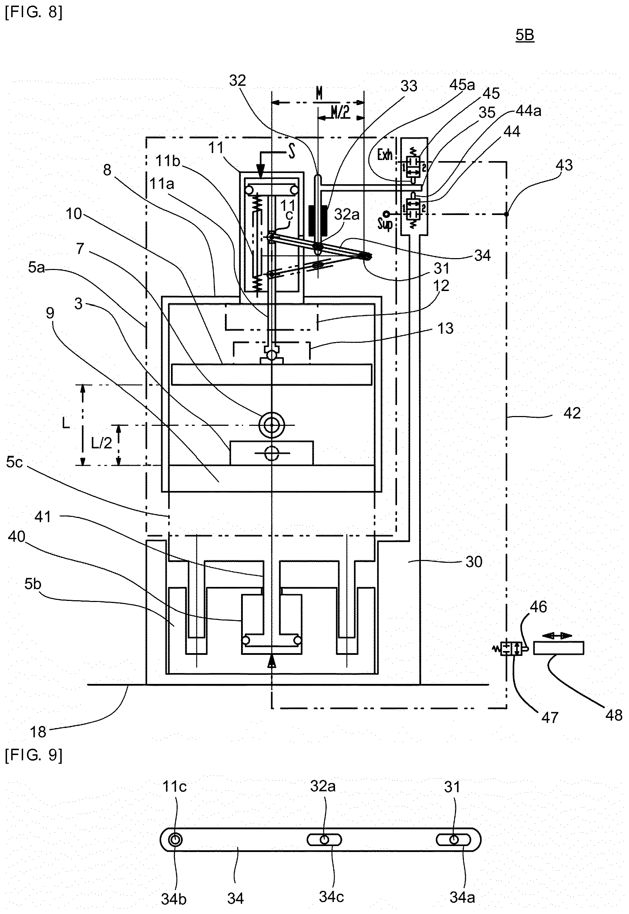

FIG. 8 shows a clamp device 5B according to another embodiment of the present invention.

The clamp device 5B of FIG. 8 includes a device housing 30, a clamp mechanism section 5a, a vertical movement mechanism 5b for vertically moving the clamp mechanism section 5a, a longitudinal movement mechanism 5c for moving the clamp mechanism section 5a in the longitudinal direction. The clamp device 5B is installed on a reference surface 18, such as a workbench or the like.

The clamp mechanism section 5a includes a clamp mechanism housing 8, a mounting table 9 having a substantially horizontal mounting surface for mounting the rubber mold 3, and a clamp drive unit 11. The mounting table 9 and the clamp drive unit 11 are fixed to the clamp mechanism housing 8, and are moved vertically in unison by the driving of the vertical movement mechanism 5b. The clamp mechanism section 5a may further include a moving mechanism 12 for moving the clamp drive unit 11 in the longitudinal direction.

The clamp drive unit 11 is configured to change a distance between the mounting table 9 and the clamp plate 10 by moving the clamp plate 10 in vertical direction. By moving the clamp plate 10 downward, the rubber mold 3 can be clamped between the mounting table 9 and the clamp plate 10. The clamp drive unit 11 is, for example, a single-acting air cylinder, in which the drive shaft 11a is moved downward by a supply pressure S and moved upward by the spring 11b when the supply pressure S is removed. The clamp drive unit 11 has a movable fulcrum 11c moving in unison with the vertical movement of the clamp plate 10 in the vertical direction. In the present embodiment, the movable fulcrum 11c is provided on the drive shaft 11a.

The clamp plate 10 is formed of a substantially flat metal plate or the like. In the preferred embodiment, the drive shaft 1a and the clamp plate 10 are connected via a floating mechanism 13 pivotably supporting the clamp plate 10.

The clamp device 5B has a fixed fulcrum 31 whose position is fixed to the clamp drive unit 11, a connecting member 32, and a link member 34. The fixed fulcrum 31 is provided, for example, on a bracket or the like attached to the outer wall of the clamp drive unit 11. The connecting member 32 is vertically guided by the guide 33 at a position away from the fixed fulcrum 31 by 1/2 of the horizontal distance M between the fixed fulcrum 31 and the movable fulcrum 11c. The connecting member 32 is provided with an intermediate fulcrum 32a.

As shown in FIG. 9, the link member 34 has an elongate hole 34a formed at one end and extending in the axial direction, a circular hole 34b formed at the other end, an elongate hole 34c formed at a substantially intermediate position thereof and extending in the axial direction. The elongate hole 34a is rotatably engaged with the fixed fulcrum 31, the circular hole 34b is rotatably engaged with the movable fulcrum 11c of the drive shaft 33a, and the elongate hole 34c is rotatably engaged with the intermediate fulcrum 32a of the connecting member 32. Therefore, the connecting member 32 moves up and down by 1/2 of the moving distance of the clamp plate 10 in conjunction with the clamp plate 10. Distance variation between the fulcrums due to the inclination of the link member 34 is absorbed by the elongate holes 34a and 34c.

The detection piece 35 is fixed to the connecting member 32 at a right angle to the moving direction of the connecting member 32.

The vertical movement mechanism 5b has an air cylinder 40, a piston rod 41 vertically movable within the air cylinder 40, and an air circuit 42 for supplying air to the air cylinder 40. The piston rod 41 is connected to the clamp mechanism section 5a, and it is possible to move the clamp mechanism section 5a relative to the reference surface 18 by moving the air cylinder 40 vertically with the air from the air circuit 42.

The air circuit 42 is connected via a branch point 43 to an air supply valve 44 and an exhaust valve 45, which are provided above and below the detection piece 35. The positions of the air supply valve 44 and the exhaust valve 45 are fixed with respect to the reference surface 18. In the present embodiment, the air supply valve 44 and the exhaust valve 45 are normally closed two-way valves. The air supply valve 44 and the exhaust valve 45 each have a lower switch 44a and an upper switch 45a. The lower switch 44a and the upper switch 45a are arranged with a slightly wider interval than the width (vertical dimension) of the detection piece 35. That is, when the detection piece 35 is located just in the middle of the switches 44a and 45a, gaps are formed between the detection piece 35 and both of the switches 44a and 45a. When the lower switch 45a is pushed downward by the detection piece 35, compressed air is supplied from the air supply valve 44 to the air circuit 42, whereby the clamp mechanism section 5a is moved upward. When the upper switch 45a is pushed up by the detection piece 35, the air of the air circuit 42 is discharged, whereby the clamp mechanism section 5a is moved downward by its own weight.

The longitudinal movement mechanism 5c has a function of guiding the clamp mechanism section 5a in a longitudinal direction. The longitudinal movement of the clamp mechanism section 5a can be made by any of electric drive, pneumatic drive, manual push and the like.

Hereinafter, operation of the clamp device 5B will be described. In an initial state, the clamp plate 10 is located above the mounting table 9 by a first distance L.

To clamp the rubber mold 3, the clamp drive unit 11 lowers the clamp plate 10 with the supply pressure S. If the lowering distance at this time is x, the intermediate fulcrum 32a (the detection piece 35) descends by X/2. At this time, the lower switch 44a is pushed down by the detection piece 35 and air is supplied from the air supply valve 44 to the air circuit 42, whereby the vertical movement mechanism 5b moves the entire clamp mechanism section 5a upward. When the clamp mechanism section 5a moves upward by X/2, the detection piece 35 separates from the lower switch 44a, the air supply is stopped, and the clamp mechanism section 5a also stops rising at that position. If the clamp mechanism section 5a moves upward too much due to some reason, the upper switch 45a is, in turn, pushed up by the detection piece 35, the air is exhausted from the exhaust valve 45 to the air circuit 42, and the entire clamp mechanism section 5a descends. As described above, since the vertical movement mechanism 5b raises the clamp mechanism section 5a to offset the descent of the intermediate fulcrum 32a by the descent of the clamp plate 10, the vertical position of the intermediate fulcrum 32a with respect to the reference plane 18 is kept substantially constant.

Finally, the clamp drive unit 11 lowers the clamp plate 10 to a position to clamp the rubber mold 3. (The distance between the mounting table 9 and the clamp plate 10 at this time is referred to as "second distance L ".) Meanwhile, the vertical movement mechanism 5b moves the clamp mechanism section 5a upward while keeping the vertical position of the intermediate fulcrum 32a with respect to the reference plane 18 substantially constant. As a result, finally, the clamp mechanism section 5a moves upward from the initial state by 1/2 of the difference (L-L') between the first distance and the second distance.

Therefore, assuming that the injection nozzle 7 of the wax mold injection molding machine is located at a height of L/2 from the mounting table 9 and the sprue 4a is located at the center in the thickness direction of the rubber mold 3, when the clamp plate 10 clamps the rubber mold 3, the height of the injection nozzle 7 coincides with the height of the sprue 4a. Even if the location of the injection nozzle 7 or the sprue 4a is somewhat different from the above, the air cylinder 40 has a cushion effect in a vertical direction, and misalignment of the center axes of the injection nozzle 7 and the sprue 4a is corrected by automatic alignment when the rubber mold 3 is pressed against the injection nozzle 7. To enable the automatic alignment of the injection nozzle 7 and the sprue 4a in a left-right direction when the rubber mold 3 is pressed against the injection nozzle 7, the longitudinal movement mechanism 5c can have a cushion effect in the left-right direction.

When wax injection to the rubber mold 3 is completed, the supply pressure S is removed and the clamp device 5B returns to the initial state through the process opposite to the above. That is, the clamp drive unit 11 raises the clamp plate 10 to a position above the mounting table 9 by the first distance L. The vertical movement mechanism 5b cancels the rising of the intermediate fulcrum 32a by the rising of the clamp plate 10, and lowers the clamp mechanism section 5a while keeping the vertical position of the intermediate fulcrum 32a with respect to the reference plane 18 substantially constant. As a result, the clamp mechanism section 5a descends by 1/2 of the difference (L-L') between the first distance and the second distance.

The gap between the detection piece 35 and the switches 44a, 45a has an effect of smoothly raising/lowering the clamp mechanism portion 5a. However, the ascent/descent distance of the clamp mechanism section 5a differs from (L-L')/2 by the gaps and plays of the switches 44a, 45a. If the gaps and plays are reduced, the ascent/descent distance of the clamp mechanism section 5a becomes closer to (L-L')/2. The ascent/descent movement of the clamp mechanism section 5a can also be made smooth by using, as the air supply valve 44 or the exhaust valve 45, a valve whose degree of opening is proportional to the amount of movement of the switches 44a, 45a.

If the vertical movement mechanism 5b is operated in a state where the rubber mold 3 pressed against the injection nozzle 7 by the longitudinal movement mechanism 5c, a load is applied to the rubber mold 3 and the injection nozzle 7 or the like, and this is not preferable. In order to prevent this, it is preferable to have a movement prohibition mechanism for prohibiting the movement of the vertical movement mechanism 5b by detecting the forward movement of the clamp mechanism section 5a. The movement prohibition mechanism may comprise an open/close valve 47 that is opened and closed by a switch 46 located in the middle of the branch point 43 and the air cylinder 40 in the air circuit 42, and a detection piece 48 that is moved in concert with the longitudinal movement of the clamp mechanism section 5a. When the clamp mechanism section 5a is at the origin position in the longitudinal direction, the switch 46 is pushed by the detection piece 48, the open/close valve 47 opens, and the air cylinder 40, the air supply valve 44 and the exhaust valve 45 communicate to one another. When the clamp mechanism section 5a advances to a certain position by the longitudinal moving mechanism 5c, the detection piece 48 separates from the switch 46, the open/close valve 47 closes, and the communication among the air cylinder 40, the air supply valve 44 and the exhaust valve 45 is closed. This prevents the vertical movement mechanism 5b from operating in a state where the rubber mold 3 is pressed against the injection nozzle 7.

Although the preferred embodiment has been described above, the embodiments described above are examples, and various modifications can be made within the scope of the claims.

For example, as described with reference to FIG. 6, the effect of the present invention is achieved by a configuration that the vertical movement mechanism 5b moves the clamp mechanism section 5a upward by 1/n (where, $1.5 \le n \le 2.5$) of the difference X between the first distance and the second distance. Therefore, the calculation unit 21 in the clamp device 5A of FIG. 7 may calculate 1/n (where, $1.5 \le n \le 2.5$) of the difference X between the first distance and the second distance. Thereby, the vertical movement mechanism 5b moves the clamp mechanism section 5a upward by 1/n of the difference X. Further, the connecting member 32 in the clamp device 5B of FIG. 8 may be configured to be vertically guided at a position away from the fixed fulcrum 31 by 1/n (where, $1.5 \le n \le 2.5$) of the horizontal distance M between the fixed fulcrum 31 and the movable fulcrum 11c. In that case, the vertical movement mechanism 5b moves the clamp mechanism section 5a upward by 1/n of the difference X between the first distance and the second distance.

It is possible to realize the vertical movement mechanism 5b operable on the same principle even by using an electric motor in place of the air cylinder 40 in the clamp device 5B of FIG. 8 and by replacing the valves 44,45 and the switches 44a, 45a with electric micros witches or limit switches. It is conceivable to constitute a circuit so that the electric motor can rotate forward and rearward by the operation of the micro switches or the limit switches, and the clamp mechanism section 5a is raised/lowered by screws, racks, pinions, or the like.

INDUSTRIAL APPLICABILITY

The present invention is applicable to a clamp device used for fixing a rubber mold in wax mold injection molding for manufacturing small articles such as jewelry, accessories and industrial products.

DESCRIPTION OF REFERENCE NUMERALS

| | |
|---|---|
| 1 | Model |
| 2 | Component |
| 3 | Rubber mold |
| 4a | Sprue |
| 5, 5A, 5B | Clamp device |
| 5a | Clamp mechanism section |
| 5b | Vertical movement mechanism |
| 5c | Longitudinal movement mechanism |
| 6 | Wax mold injection molding machine |
| 7 | Injection nozzle |

| 8 | Clamp mechanism housing |
|---|---|
| 9 | mounting table |
| 10 | Clamp plate |
| 11 | Clamp drive unit |
| 11c | Movable fulcrum |
| 12 | Moving mechanism |
| 20 | Moving distance measuring mechanism |
| 21 | Calculation unit |
| 30 | Device housing |
| 31 | Fixed fulcrum |
| 32 | Connecting member |
| 32a | Intermediate fulcrum |
| 33 | Guide |
| 34 | Link member |
| 35 | Detection piece |
| 40 | Air cylinder |
| 41 | Piston rod |
| 42 | Air circuit |
| 44 | Air supply valve |
| 45 | Exhaust valve |
| 44a | Lower switch |
| 45a | Upper switch |
| 46 | Switch |
| 47 | Open/close valve |
| 48 | Detection piece |

**Claims**

1. A clamp device (5B) for wax mold injection molding, comprising:

   a clamp mechanism section (5a) including a mounting table (9) for mounting a mold (3), a clamp plate (10), and a clamp drive unit (11) for changing a vertical distance between the mounting table (9) and the clamp plate (10), and
   a vertical movement mechanism (5b) for vertically moving the clamp mechanism section (5a) with respect to a reference surface, the mold (3) being clamped between the mounting table (9) and the clamp plate (10), **characterized in that** the clamp device (5B) further comprises:

   a fixed fulcrum (31) whose vertical position is fixed with respect to the clamp drive unit (11);
   a movable fulcrum (11c) which is vertically movable in unison with the clamp plate (10);
   an intermediate fulcrum (32a) which is vertically movable at a position spaced horizontally from the fixed fulcrum (31) by 1/n of a horizontal distance between the fixed fulcrum (31) and the movable fulcrum 11(c), wherein the value of n is defined by $1.5 \leq n \leq 2.5$;
   a link member (34) having a one end engaged with the movable fulcrum (11c), an other end engaged with the fixed fulcrum (31), and an intermediate portion between the one end and the other end engaged with the intermediate fulcrum (32a),
   wherein the vertical movement mechanism (5b) vertically moves the clamp mechanism section (5a) while keeping the vertical position of the intermediate fulcrum (32) with respect to the reference surface (18) substantially constant.

2. The clamp device (5B) according to claim 1, further comprising:
   a detection piece (35) vertically movable in unison with the intermediate fulcrum (32a) and a lower switch (44a) and an upper switch (45a) arranged above and below the detection piece (35), wherein:

   when the detection piece (35) contacts the lower switch (44a), the vertical movement mechanism (5b) moves the clamp mechanism section (5a) upward, and
   when the detection piece (35) contacts the upper switch (45a), the vertical movement mechanism (5b) moves the clamp mechanism section (5a) downward.

**3.** The clamp device (5B) according to claim 2, wherein the vertical movement mechanism (5b) includes:

an air supply valve (44) that is opened and closed by the lower switch (44a);
an exhaust valve (45) that is opened and closed by the upper switch (45a); and
an air cylinder (40) for driving the clamp mechanism section (5a), wherein:

when the detection piece (35) contacts with the lower switch (44a), air is supplied from the air supply valve (44) to the air cylinder (40) to move the clamp mechanism section (5a) upward, and
when the detection piece (35) contacts with the upper switch (45a), the air in the air cylinder (40) is removed from the exhaust valve (45) to move the clamp mechanism section downward.

**4.** The clamp device (5B) according to any one of claims 1 to 3, further comprising a longitudinal movement mechanism (5c) that moves the clamp mechanism section (5a) in a longitudinal direction; and
a movement prohibition mechanism (46, 47, 48) that prohibits the vertical movement mechanism from vertically moving the clamp mechanism section (5a) depending on the position of the clamp mechanism section (5a) in the longitudinal direction.

**5.** A clamp device (5, 5A, 5B) for wax mold injection molding, comprising:

a clamp mechanism section (5a) including a mounting table (9) for mounting a mold (3), a clamp plate (10), and a clamp drive unit (11) for changing a vertical distance between the mounting table (9) and the clamp plate (10), and
a vertical movement mechanism (5b) for vertically moving the clamp mechanism section (5a), the mold (3) being clamped between the mounting table (9) and the clamp plate (10) when the clamp drive unit (11) changes the distance between the mounting table (9) and the clamp plate (10) from a first distance to a second distance smaller than the first distance, **characterized in that**:
the clamp device further comprises a control unit (20, 21, 31, 11c, 32a, 35, 44, 44a, 45, 45a) for controlling the vertical movement mechanism (5b) such that the clamp mechanism section (5a) is moved upward by 1/n of the difference between the first distance and the second distance, wherein the value of n is defined by 1.5≤n≤2.5.

**6.** The device according to any one of claims 1 to 5, wherein the n is substantially 2.

**7.** A method of controlling a clamp device (5, 5A, 5B) for wax mold injection molding, wherein said clamp device (5, 5A, 5B) comprises:

a clamp mechanism section (5a) including a mounting table (9) for mounting a mold (3), a clamp plate (10), and a clamp drive unit (11) for changing a vertical distance between the mounting table (9) and the clamp plate (10), and
a vertical movement mechanism (5b) for vertically moving the clamp mechanism section (5a),the mold (3) being clamped between the mounting table (9) and the clamp plate (10) when the clamp drive unit (11) changes the distance between the mounting table (9) and the clamp plate (10) from a first distance to a second distance smaller than the first distance, **characterized in that**: said method comprises a step of moving the clamp mechanism section (5a) upward by 1/n of the difference between the first distance and the second distance, wherein the value of n is defined by 1.5≤n≤2.5.

**Patentansprüche**

**1.** Klemmvorrichtung (5B) für Wachsmodell-Spritzgießen, die Folgendes aufweist:

einen Klemmmechanismusabschnitt (5a), der einen Aufspanntisch (9) zum Aufspannen eines Modells (3), eine Klemmplatte (10) und eine Klemmantriebseinheit (11) zum Ändern eines vertikalen Abstands zwischen dem Aufspanntisch (9) und der Klemmplatte (10) aufweist, und
einen Vertikalbewegungsmechanismus (5b) zum vertikalen Bewegen des Klemmmechanismusabschnitts (5a) in Bezug auf eine Bezugsfläche, wobei das Modell (3) zwischen dem Aufspanntisch (9) und der Klemmplatte (10) eingeklemmt wird, **dadurch gekennzeichnet, dass** die Klemmvorrichtung (5B) ferner Folgendes aufweist:

einen festen Drehpunkt (31), dessen vertikale Position in Bezug auf die Klemmantriebseinheit (11) fest ist;

einen beweglichen Drehpunkt (11c), der in Übereinstimmung mit der Klemmplatte (10) vertikal beweglich ist;

einen Zwischendrehpunkt (32a), der an einer Position, die um 1/n eines horizontalen Abstands zwischen dem festen Drehpunkt (31) und dem beweglichen Drehpunkt (11c) horizontal von dem festen Drehpunkt (31) beabstandet ist, vertikal beweglich ist, wobei der Wert n von $1,5 \leq n \leq 2,5$ definiert wird;

ein Verbindungselement (34) mit einem Ende, das mit dem beweglichen Drehpunkt (11c) in Eingriff ist, einem anderen Ende, das mit dem festen Drehpunkt (31) in Eingriff ist, und einem Zwischenteil zwischen dem einen Ende und dem anderen Ende, das mit dem Zwischendrehpunkt (32a) in Eingriff ist,

wobei der senkrechte Bewegungsmechanismus (5b) den Klemmmechanismusabschnitt (5a) vertikal bewegt, während er die vertikale Position des Zwischendrehpunkts (32) in Bezug auf die Bezugsfläche (18) im Wesentlichen konstant hält.

2. Klemmvorrichtung (5B) nach Anspruch 1, die ferner Folgendes aufweist:

ein Erkennungsstück (35), das in Übereinstimmung mit dem Zwischendrehpunkt (32a) vertikal beweglich ist, und einen unteren Schalter (44a) und einen oberen Schalter (45a), die ober- und unterhalb des Erkennungsstücks (35) angeordnet sind, wobei:

wenn das Erkennungsstück (35) mit dem unteren Schalter (44a) in Kontakt kommt, der Vertikalbewegungsmechanismus (5b) den Klemmmechanismusabschnitt (5a) nach oben bewegt, und,

wenn das Erkennungsstück (35) mit dem oberen Schalter (45a) in Kontakt kommt, der Vertikalbewegungsmechanismus (5b) den Klemmmechanismusabschnitt (5a) nach unten bewegt.

3. Klemmvorrichtung (5B) nach Anspruch 2, wobei der Vertikalbewegungsmechanismus (5b) Folgendes enthält:

ein Luftzuführventil (44), das durch den unteren Schalter (44a) geöffnet und geschlossen wird;

ein Luftablassventil (45), das durch den oberen Schalter (45a) geöffnet und geschlossen wird; und

einen Luftzylinder (40) zum Antreiben des Klemmmechanismusabschnitts (5a), wobei:

wenn das Erkennungsstück (35) mit dem unteren Schalter (44a) in Kontakt kommt, dem Luftzylinder (40) Luft aus dem Luftzuführventil (44) zugeführt wird, um den Klemmmechanismusabschnitt (5a) nach oben zu bewegen, und,

wenn das Erkennungsstück (35) mit dem oberen Schalter (45a) in Kontakt kommt, die Luft im Luftzylinder (40) von dem Luftablassventil (45) entfernt wird, um den Klemmmechanismusabschnitt nach unten zu bewegen.

4. Klemmvorrichtung (5B) nach einem der Ansprüche 1 bis 3, die ferner einen Längsbewegungsmechanismus (5c) aufweist, der den Klemmmechanismusabschnitt (5a) in einer Längsrichtung bewegt; und

einen Bewegungssperrmechanismus (46, 47, 48), der den Vertikalbewegungsmechanismus daran hindert, den Klemmmechanismusabschnitt (5a) vertikal zu bewegen, je nach der Position des Klemmmechanismusabschnitts (5a) in der Längsrichtung.

5. Klemmvorrichtung (5, 5A, 5B) für Wachsmodell-Spritzgießen, die Folgendes aufweist:

einen Klemmmechanismusabschnitt (5a), der einen Aufspanntisch (9) zum Aufspannen eines Modells (3), eine Klemmplatte (10) und eine Klemmantriebseinheit (11) zum Ändern eines vertikalen Abstands zwischen dem Aufspanntisch (9) und der Klemmplatte (10) aufweist, und

einen Vertikalbewegungsmechanismus (5b) zum vertikalen Bewegen des Klemmmechanismusabschnitts (5a), wobei das Modell (3) zwischen dem Aufspanntisch (9) und der Klemmplatte (10) eingeklemmt wird, wenn die Klemmantriebseinheit (11) den Abstand zwischen dem Aufspanntisch (9) und der Klemmplatte (10) von einem ersten Abstand auf einen zweiten Abstand, der kleiner ist als der erste Abstand, ändert, **dadurch gekennzeichnet, dass**:

die Klemmvorrichtung ferner eine Steuereinheit (20, 21,31, 11c, 32a, 35, 44, 44a, 45, 45a) zum Steuern des Vertikalbewegungsmechanismus (5b), so dass der Klemmmechanismusabschnitt (5a) um 1/n der Differenz zwischen dem ersten Abstand und dem zweiten Abstand nach oben bewegt wird, aufweist, wobei der Wert von n von $1,5 \leq n \leq 2,5$ definiert wird.

6. Vorrichtung nach einem der Ansprüche 1 bis 5, wobei n im Wesentlichen 2 ist.

7. Verfahren zum Steuern einer Klemmvorrichtung (5, 5A, 5B) für Wachsmodell-Spritzgießen, wobei die genannte Klemmvorrichtung (5, 5A, 5B) Folgendes aufweist:

einen Klemmmechanismusabschnitt (5a), der einen Aufspanntisch (9) zum Aufspannen eines Modells (3), eine Klemmplatte (10) und eine Klemmantriebseinheit (11) zum Ändern eines vertikalen Abstands zwischen dem Aufspanntisch (9) und der Klemmplatte (10) aufweist, und

einen Vertikalbewegungsmechanismus (5b) zum vertikalen Bewegen des Klemmmechanismusabschnitts (5a), wobei das Modell (3) zwischen dem Aufspanntisch (9) und der Klemmplatte (10) eingeklemmt wird, wenn die Klemmantriebseinheit (11) den Abstand zwischen dem Aufspanntisch (9) und der Klemmplatte (10) von einem ersten Abstand auf einen zweiten Abstand, der kleiner ist als der erste Abstand, ändert, **dadurch gekennzeichnet, dass**:

das genannte Verfahren einen Schritt des Bewegens des Klemmmechanismusabschnitts (5a) um 1/n der Differenz zwischen dem ersten Abstand und dem zweiten Abstand nach oben aufweist, wobei der Wert von n von $1{,}5 \leq n \leq 2{,}5$ definiert wird.

## Revendications

1. Dispositif de serrage (5B) à des fins de moulage par injection d'un moule en cire, comportant :

une section de mécanisme de serrage (5a) comprenant une table de montage (9) servant à monter un moule (3), une plaque de serrage (10), et une unité d'entraînement de serrage (11) servant à changer une distance verticale entre la table de montage (9) et la plaque de serrage (10), et

un mécanisme de mouvement vertical (5b) servant à déplacer à la verticale la section de mécanisme de serrage (5a) par rapport à une surface de référence, le moule (3) étant serré entre la table de montage (9) et la plaque de serrage (10), **caractérisé en ce que** le dispositif de serrage (5B) comporte par ailleurs :

un point d'appui fixe (31) dont la position verticale est fixe par rapport à l'unité d'entraînement de serrage (11) ;

un point d'appui mobile (11c) qui est mobile à la verticale de concert avec la plaque de serrage (10) ;

un point d'appui intermédiaire (32a) qui est mobile à la verticale au niveau d'une position espacée à l'horizontale par rapport au point d'appui fixe (31) sur 1/n d'une distance horizontale entre le point d'appui fixe (31) et le point d'appui mobile (11c), dans lequel la valeur de n est définie par $1{,}5 \leq n \leq 2{,}5$ ;

un élément de liaison (34) ayant une extrémité mise en prise avec le point d'appui mobile (11c), une autre extrémité mise en prise avec le point d'appui fixe (31), et une partie intermédiaire entre ladite une extrémité et ladite une autre extrémité mise en prise avec le point d'appui intermédiaire (32a),

dans lequel le mécanisme de mouvement vertical (5b) déplace à la verticale la section de mécanisme de serrage (5a) tout en maintenant la position verticale du point d'appui intermédiaire (32) par rapport à la surface de référence (18) sensiblement constante.

2. Dispositif de serrage (5B) selon la revendication 1, comportant par ailleurs :
un module de détection (35) mobile à la verticale de concert avec le point d'appui intermédiaire (32a) et un commutateur inférieur (44a) et un commutateur supérieur (45a) agencés au-dessus et en dessous du module de détection (35), dans lequel :

quand le module de détection (35) entre en contact avec le commutateur inférieur (44a), le mécanisme de mouvement vertical (5b) déplace la section de mécanisme de serrage (5a) vers le haut, et

quand le module de détection (35) entre en contact avec le commutateur supérieur (45a), le mécanisme de mouvement vertical (5b) déplace la section de mécanisme de serrage (5a) vers le bas.

3. Dispositif de serrage (5B) selon la revendication 2, dans lequel le mécanisme de mouvement vertical (5b) comprend :

une soupape d'alimentation en air (44) qui est ouverte et fermée par le commutateur inférieur (44a) ;

une soupape d'échappement (45) qui est ouverte et fermée par le commutateur supérieur (45a) ; et

un vérin pneumatique (40) servant à entraîner la section de mécanisme de serrage (5a), dans lequel :

quand le module de détection (35) entre en contact avec le commutateur inférieur (44a), de l'air est fourni par le biais de la soupape d'alimentation en air (44) à destination du vérin pneumatique (40) pour déplacer la section de mécanisme de serrage (5a) vers le haut, et

quand le module de détection (35) entre en contact avec le commutateur supérieur (45a), l'air dans le vérin pneumatique (40) est retiré par le biais de la soupape d'échappement (45) pour déplacer la section de mécanisme de serrage vers le bas.

4.  Dispositif de serrage (5B) selon l'une quelconque des revendications 1 à 3, comportant par ailleurs un mécanisme de mouvement longitudinal (5c) qui déplace la section de mécanisme de serrage (5a) dans une direction longitudinale ; et
    un mécanisme d'inhibition de mouvement (46, 47, 48) qui empêche le mécanisme de mouvement vertical de déplacer à la verticale la section de mécanisme de serrage (5a) en fonction de la position de la section de mécanisme de serrage (5a) dans la direction longitudinale.

5.  Dispositif de serrage (5, 5A, 5B) à des fins de moulage par injection d'un moule en cire, comportant :

    une section de mécanisme de serrage (5a) comprenant une table de montage (9) servant à monter un moule (3), une plaque de serrage (10), et une unité d'entraînement de serrage (11) servant à changer une distance verticale entre la table de montage (9) et la plaque de serrage (10), et
    un mécanisme de mouvement vertical (5b) servant à déplacer à la verticale la section de mécanisme de serrage (5a), le moule (3) étant serré entre la table de montage (9) et la plaque de serrage (10) quand l'unité d'entraînement de serrage (11) change la distance entre la table de montage (9) et la plaque de serrage (10) d'une première distance à une deuxième distance inférieure par rapport à la première distance, **caractérisé en ce que** :
    le dispositif de serrage comporte par ailleurs une unité de commande (20, 21, 31, 11c, 32a, 35, 44, 44a, 45, 45a) servant à commander le mécanisme de mouvement vertical (5b) de telle sorte que la section de mécanisme de serrage (5a) est déplacée vers le haut sur 1/n de la différence entre la première distance et la deuxième distance, dans lequel la valeur de n est définie par $1,5 \leq n \leq 2,5$.

6.  Dispositif selon l'une quelconque des revendications 1 à 5, dans lequel le n est sensiblement 2.

7.  Procédé de commande d'un dispositif de serrage (5, 5A, 5B) à des fins de moulage par injection d'un moule en cire, dans lequel ledit dispositif de serrage (5, 5A, 5B) comporte :

    une section de mécanisme de serrage (5a) comprenant une table de montage (9) servant à monter un moule (3), une plaque de serrage (10), et une unité d'entraînement de serrage (11) servant à changer une distance verticale entre la table de montage (9) et la plaque de serrage (10), et
    un mécanisme de mouvement vertical (5b) servant à déplacer à la verticale la section de mécanisme de serrage (5a), le moule (3) étant serré entre la table de montage (9) et la plaque de serrage (10) quand l'unité d'entraînement de serrage (11) change la distance entre la table de montage (9) et la plaque de serrage (10) d'une première distance à une deuxième distance inférieure par rapport à la première distance, **caractérisé en ce que** :
    ledit procédé comporte une étape consistant à déplacer la section de mécanisme de serrage (5a) vers le haut sur 1/n de la différence entre la première distance et la deuxième distance, dans lequel la valeur de n est définie par $1,5 \leq n \leq 2,5$.

[FIG. 1]

[FIG. 2]

[FIG. 3]

[FIG. 4]

[FIG. 5]

$$Y = L/2 - (L-X)/2 = X/2$$

[FIG. 6]

$$Y = L/2 - (L-X)/2 = X/2$$

[FIG. 7]

[FIG. 8]

[FIG. 9]

**EP 3 326 732 B1**

**Patent documents cited in the description**

- WO 2013038448 A